# EUROPEAN PATENT SPECIFICATION

(11) **EP 1 018 353 B1**
(45) Date of publication and mention of the grant of the patent: **15.03.2006**
(21) Application number: 99810003.6
(22) Date of filing: 05.01.1999
(51) Int. Cl.: B01D 19/00, G01N 30/14, B01D 63/00

(54) **Vacuum deaeration device**
Vorrichtung zur Vakuumentlüftung
Dispositif d'aération en vide

(43) Date of publication of application: 12.07.2000
(73) Proprietor: Erc Inc., Kawaguchi-shi, Saitama-ken (JP)
(72) Inventor: Nagai, Akihiko, c/o ERC Inc., Kawaguchi-shi, Saitama-ken (JP)
(74) Representative: Isler & Pedrazzini AG

(56) References cited:
- DE-A- 2 437 161
- DE-A- 2 907 188
- DE-C- 4 327 582
- US-A- 5 340 384

## Description

### FIELD OF THE INVENTION AND RELATED ART STATEMENT

This invention relates to a vacuum deaeration device in which a transmission film for allowing only gas to pass therethrough and preventing liquid from being transmitted is mounted within a vacuum container, a pressure within the vacuum container is reduced by a vacuum pump or the like to deaerate resolved gas from liquid (deaerated liquid) contacted with the aforesaid transmission film through the transmission film, and more particularly a vacuum deaeration device suitable for removing resolved gas from liquid (deaerated liquid) in various kinds of production process facilities including a liquid chromatograph as well as various kinds of physical and chemical and analytical devices, pharmaceutical engineering, semi-conductors and liquid crystals and the like.

A vacuum deaeration device according to the preamble of claim 1 is known from US-A-5 538 538.

In the case that analytical processing is carried out by an analytical equipment such as a liquid chromatograph device or the like, for example, resolved gas is removed (deaerated) from sample liquid or solvent, dampening liquid or the like in view of improving reliability in measurement data, although a fluorine transmission film for allowing only gas to pass therethrough and preventing liquid from being transmitted is used at a location of the deaeration device applied for this operation contacted with the aforesaid sample liquid or solvent, dampening liquid or the like.

The transmission film used in this type of deaeration device is usually manufactured by a method wherein residual gasoline substances (naphtha, white oil or the like) are added to and mixed with powder-like fluorine plastic substrate to form paste, the paste material is extruded and baked under a high temperature (approximately 100 °C to 400 °C).

At this time, liquid of low boiling point such as the aforesaid gasoline residuals is evaporated during baking operation and removed. However, actually, liquid of low boiling point, in particular, aromatic substances and olefin substances are not completely evaporated and a small amount of substances is left in the transmission film. These substances remained in the transmission film are freely separated when liquid (deaerated liquid) is contacted with the transmission film, resolved into deaerated liquid, and a bad influence (a measurement error or the like) is applied to the result of measurement performed by the liquid chromatograph device or quality keeping controls in various kinds of production processes.

### OBJECT AND SUMMARY OF THE INVENTION

This invention has been completed in view of such disadvantages as above in the prior art, wherein the present invention provides a vacuum deaeration device having no possibility that aromatic substances or olefin substances applying bad influence against the result of measurement performed by an analytical equipment or the like and quality keeping controls at various kinds of production processes are resolved into liquid (deaerated liquid) contacted with the transmission film.

The vacuum deaeration device of the present invention accomplishing the aforesaid object is a vacuum deaeration device according to claim 1. As plastic substrate, polytetrafluoroethylene (PTFE) may be used.

### BRIEF DESCRIPTION OF THE DRAWINGS

Fig. 1 is a schematic diagram for showing one example of the preferred embodiment of the present invention.
Fig. 2 is a chromatogram detected by a gradient resolved liquid chromatography.

### DETAILED DESCRIPTION OF PREFERRED EMBODIMENTS

Then, one preferred embodiment of the present invention will be described in detail as follows.

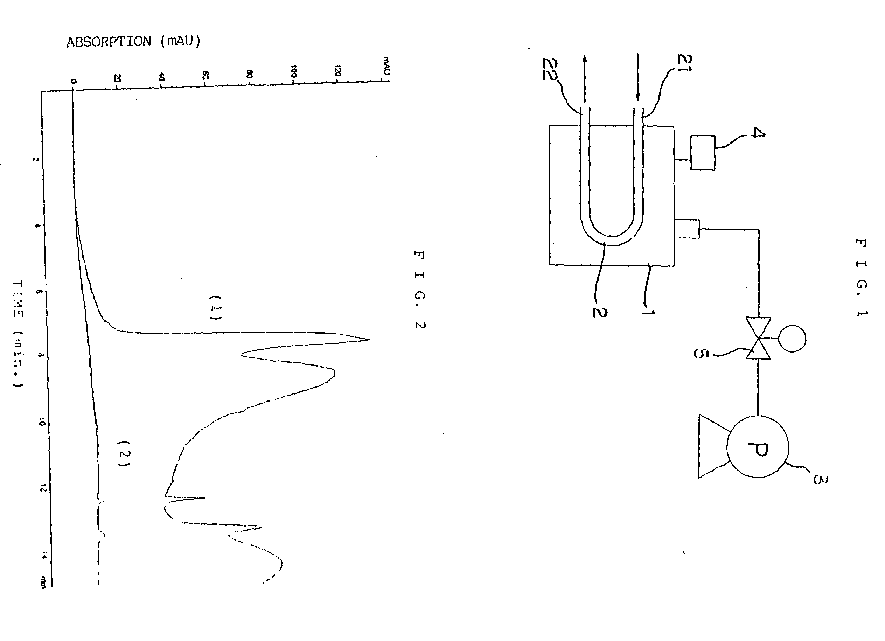

In Fig. 1, reference numeral 1 denotes a vacuum container, reference numeral 2 denotes a tube-like transmission film mounted within the vacuum container 1 so as to pass only gas and prevent transmission of liquid, and reference numeral 3 denotes a vacuum pump for reducing pressure inside the vacuum container 1.

In the case of the preferred embodiment shown in the drawing, it is constructed such that the transmission film 2 formed into a tube with a predetermined length is used, one or a plurality of films are mounted within the vacuum container and at the same time each of a liquid inlet 21 and a liquid outlet 22 of the tube-like transmission film 2 is placed outside the vacuum container 1, the deaerated liquid is flowed from the liquid inlet 21 of the tube-like transmission film 2 while a pressure of the inside part of the vacuum container 1 is being controlled to be reduced by a vacuum pump 3 and then resolved liquid is deaerated from the deaerated liquid while the liquid is discharged out of the outlet 22.

In addition, reference numeral 4 in the drawing denotes a pressure sensor, reference numeral 5 denotes a check valve operated with a specified pressure, respectively, and it is not necessarily required to arrange these devices, and if the pressure sensor 4 or check valve 5 is mounted, a pressure within the vacuum container 1 can be controlled in a more precise and positive manner.

The transmission film 2 of the present invention is manufactured by a method wherein dispersion liquid is added to and mixed with particle-like plastic substrate to form paste, the pasted plastic substrate is extruded by an extruder into a tube-like shape or a film-like shape or a membrane-like shape, baked under a high temperature (approximately 100 °C to 400 °C) and then the transmission film is mounted within the vacuum container 1 in such a way that it may be contacted with the deaerated liquid.

In the present specification, it is assumed that the expression of "particle" includes a state of fine particle.

As plastic substrate which can be applied for manufacturing the transmission film 2 of the present invention, although plastic substrate of fluorine system for allowing only gas to pass and preventing transmission of liquid, more practically polymer containing fluorine such as polytetrafluoroethylene(PTFE)or fluoric ethylene propylene (FEP), ethylene tetrafluoroethylene (ETFE) or the like can be applied, the present invention is not limited to these polymers.

In addition, as dispersion liquid added to and mixed with particle plastic substrate linear chain-like parafin substances not containing non-saturated hydrocarbon is used

### [EXAMPLE]

As plastic substrate, polytetrafluoroethylene (hereinafter abbreviated as PTFE) was used, linear chain-like parafin substances not containing non-saturated hydrocarbon was used as dispersion liquid, the aforesaid dispersion liquid was added to and mixed with particle PTFE and then paste-like PTFE was made. This paste-like PTFE was extruded into a tube-form by an extruder and baked to attain a tube-like transmission film.

The aforesaid tube-like transmission film made of PTFE was assembled into a vacuum deaeration device for use in removing (deaerating) gas in advance from sample liquid or solvent, dampening liquid or the like at a liquid chromatograph device and then detected by a gradient solution liquid chromatography. In the case of gradient solution liquid chromatography, a concentration of moving phase (solvent) is changed continuously during chromatograph operation, contaminated substances separated in the moving phase are condensed in the gradient solution in the separating column and solved with a rate of corresponding solution agent in the gradient. Accordingly, when aromatic substances having a power of absorbing ultra-violet rays enters into a sensor (ultraviolet ray absorption sensor), for example, it may interfere with measurement.

Fig. 2 shows a chromatogram detected by a gradient solution liquid chromatography, wherein (1) is attained by a liquid chromatograph having PTFE tube-like transmission film of prior art and (2) is attained by a liquid chromatograph having PTFE tube-like transmission film manufactured by the aforesaid preferred embodiment. As the sensing operation, mixture of acetonitrile-water was used and as the sensor, an ultra-violet ray absorbing sensor with a wave-length of 210 nm was used.

As apparent from this Fig. 2, it is seen that contamination generating bad influence (error) on a result of measurement in the liquid chromatograph in the case of PTFE tube-like transmission film (1) of the prior art is produced and a substantial flat base line is indicated in the case of PTFE tube-like transmission film (2) of the preferred embodiment of the present invention and a scarce interference is found in a quantitative measurement of sample.

In accordance with the vacuum deaeration device of the present invention, product having dispersion liquid of high volatile characteristic composed of single solution not containing both aromatic substances and olefin substances added to particle plastic substrate to form paste material and the paste material being extruded and baked is used as a transmission film for allowing only gas to pass and preventing liquid from being transmitted, so that the aromatic substances and olefin substances are not originally present at the transmission film contacted with the deaerated liquid, resulting in that there occurs no possibility that both aromatic substances and olefin substances are freely separated and resolved into deaerated liquid when the deaerated liquid is contacted with this transmission film. As a result, there occurs no possibility at all that a bad influence (a measurement error or the like) is applied to a measurement result performed by the liquid chromatograph device or the like or quality keeping control at various kinds of production processes.

Having described specific preferred embodiments of the invention with reference to the accompanying drawings, it will be appreciated that the present invention is not limited to those precise embodiments, and that various changes and modifications can be effected therein by one of ordinary skill in the art without departing from the scope of the invention as defined by the appended claims.

## Claims

1. A vacuum deaeration device comprising:
a vacuum container (1); and
a transmission film (2) mounted in said vacuum container (1), said transmission film (2) allowing only gas to pass and preventing liquid from being transmitted, the pressure within said vacuum container (1) being reducible to cause resolved gas to be deaerated from the liquid through said transmission film (2),
wherein as a transmission film (2), there is applied a product being manufactured from a paste material mixture of a high volatility dispersion liquid and particle plastic substrate which paste material mixture is extruded and baked,
**characterised in that**
the high volatility dispersion liquid consists of linear chain-like paraffin substances.

2. A vacuum deaeration device according to claim 1 **characterised in that** said plastic substrate is polytetrafluoroethylene.

## Revendications

1. Dispositif de dégazage sous vide comprenant :
un récipient sous vide (1) ; et
un film de transmission (2) monté dans ledit récipient sous vide (1), ledit film de transmission (2) ne permettant que le passage de gaz et empêchant la transmission de liquide, la pression à l'intérieur dudit récipient sous vide (1) pouvant être réduite pour provoquer le dégazage du liquide à travers ledit film de transmission (2), pour le débarrasser du gaz remis en solution,
dans lequel, comme film de transmission (2), on applique un produit fabriqué à partir d'un mélange de matériau en pâte constitué d'un liquide de dispersion de volatilité élevée et d'un substrat plastique particulaire, ce mélange de matériau en pâte étant extrudé et cuit,
**caractérisé en ce que**
le liquide de dispersion de volatilité élevée est constitué de substances de type paraffine à chaîne linéaire.

2. Dispositif de dégazage sous vide selon la revendication 1 **caractérisé en ce que** ledit substrat plastique est le polytétrafluoroéthylène.

## Patentansprüche

1. Ein Vakuum-Entgasungsgerät aufweisend:
einen Vakuumbehälter (1); und
einen Transmissionsfilm (2), welcher im genannten Vakuumbehälter (1) angeordnet ist, wobei der genannte Transmissionsfilm (2) nur Gas hindurchlässt und Flüssigkeit daran hindert, hindurchzutreten, wobei der Druck innerhalb des Vakuumbehälters (1) reduzierbar ist zur Bewirkung der Entgasung von gelöstem Gas aus der Flüssigkeit durch den genannten Transmissionfilm (2),
wobei als Transmissionsfilm (2) ein Produkt verwendet ist, welches aus einer pastösen Materialmischung aus einer hoch flüchtigen Dispersionsflüssigkeit und partikulärem Plastiksubstrat hergestellt wurde, wobei das pastöse Material extrudiert und gebacken wird,
**dadurch gekennzeichnet, dass**
die hoch flüchtige Dispersionsflüssigkeit aus linearketten-ähnlichen Paraffinsubstanzen besteht.

2. Ein Vakuum-Entgasungsgerät nach Anspruch 1 **dadurch gekennzeichnet, dass** das genannte Plastiksubstrat Polytetrafluoroethylen ist.
